# EUROPEAN PATENT APPLICATION

(11) **EP 1 622 383 A1**
(43) Date of publication of application: **01.02.2006**
(21) Application number: 05014652.1
(22) Date of filing: 06.07.2005
(51) Int. Cl.: H04N 7/24

(54) **Digital cable broadcast system, TV receiver, and method**

(30) Priority: 27.07.2004 KR 2004058715
(71) Applicant: LG Electronics, Inc., Seoul (KR)
(72) Inventor: Kim, Bong Seok, Gangnam-gu Seoul (KR); Cha, Sang Hoon, Seodaemun-gu Seoul (KR)
(74) Representative: Zech, Stefan Markus

(57) **Abstract**

A digital cable broadcast system includes a broadcast transmitter and a digital cable TV receiver. The TV receiver includes a POD module which receives a generic feature control message from the broadcast transmitter. The generic feature control message includes cable band information identifying a cable band selected by the broadcast transmitter. The POD module generates application protocol data including the cable band information. The TV receiver further includes a host device which parses the cable band information from the application protocol data and tunes to a channel based on the cable band identified by the parsed band information in order to receive a cable broadcast signal from the transmitter.

## Description

This application claims the benefit of the Korean Patent Application No. 10-2004-0058715, filed on July 27, 2004, which is hereby incorporated by reference.

### BACKGROUND OF THE INVENTION

### Field of the Invention

The present invention relates to a cable broadcast transmitting/receiving system that transmits and receives a cable broadcast, and more particularly, to a digital cable broadcast system, TV receiver, and method, in which a transmitting end transmits cable band information and in which a receiving side receives the cable band information to process.

### Discussion of the Related Art

Generally, a per channel frequency of cable broadcasting can be transmitted over one fixed band or one of a plurality of bands. For instance, in case of North America Local Cable Broadcasting, there exist three cable bands, i.e., STD (standard frequencies) band, HRC (harmonic related carriers) band and IRC (increment related carriers) band. Each cable broadcasting station selects one of the three cable bands to service a cable broadcast.

The STD band is a frequency that FCC (Federal Communication Committee) assigns to terrestrial transmission broadcasting stations. The IRC band is the standard for minimizing distortion and interference caused by amplification in a cable plant (operative in assigning a channel to a signal transferred via cable) when a TV signal is transferred via cable. And, the HRC band is the standard defined to reduce the distortion extent smaller than that of the IRC band.

In this case, the STD and IRC bands have the same channel frequencies except channel-5 (Ch5) and channel-6 (Ch6). Namely, the channel-5 and the channel-6 are channels for identifying the STD and IRC bands from each other. And, channel frequencies of the HRC band are lower than those of the STD band by 1.25MHz. For instance, the STD band has the channel-5 frequency of 79MHz, the HRC band has the channel-5 frequency of 77.5MHz, and the IRC band has the channel-5 frequency of 81MHz. In this case, 79MHz is called a center frequency of the channel-5 of the STD band, 77.5MHz is called a center frequency of the channel-5 of the HRC band, and 81MHz is called a center frequency of the channel-5 of the IRC band. For instance, assuming that there exists a cable channel called ' MBC drama' , the center frequency of the channel differs according to the STD, IRC or HRC band.

Each channel received by one cable broadcasting receiver is transmitted using one collective cable band. Namely, cable broadcasting signals for a plurality of channels are transmitted to each cable subscriber corresponding to a receiving side using one of three kinds of the cable bands. Moreover, a cable broadcasting station that transmits a broadcasting signal of each channel over a transport path occasionally switches the cable band. In this case, all channels are simultaneously switched to the collective cable band. For instance, cable broadcasting signals of the respective channels are firstly transmitted via the STD band and can be then transmitted via the HRC band. If so, a tuner of the corresponding cable broadcasting receiver switches a receiving band from the STD band to the HRC band to tune the channels. If not, strong noise appears on a screen or a specific channel cannot be received at all. For these reasons, a receiver enabling all receptions of cable broadcasting of the three kinds of the cable bands needs to know which cable broadcasting station transmits the corresponding broadcast via which one of the cable bands.

In a related art cable broadcasting receiver, a user directly confirms a cable band of a corresponding area or the receiver and selects one of the STD, HRC and IRC bands to set as a reception band. For instance, if a user sets a reception band as the STD band via a menu screen and the like, the corresponding receiver tunes channel frequencies of the STD band in scanning channels or tuning a specific channel. Yet, a user has no idea what a cable band is in general. Hence, it is highly probable that he or she may select a wrong cable band. To minimize occurrence of such a wrong selection of the cable band, a user may inquire a cable broadcasting service provider.

Alternatively, a user or receiver performs auto-scan for channel search of each cable band in a manner of sequentially selecting the three kinds of the cable bands and then sets the cable band, which enables a user to view the most channels, as the reception band. For instance, if a user selects the STD band, a receiver searches all channels of the STD band to display the number of currently viewable channels in the STD band. Subsequently, if the user selects the HRC band, the receiver searches all channels of the HRC band to display the number of currently viewable channels in the HRC band. After completion of the channel search of the HRC band, if the user selects the IRC band, the receiver searches all channels of the IRC band to display the number of currently viewable channels in the IRC band. Thereafter, the user selects the cable band having displayed the most number of the currently viewable channels to set as the reception band. And, the receiver tunes channel frequencies of the user-set cable band in channel scan or tuning of a specific channel.

However, in the method that the user directly inquires the cable broadcasting service provider of the cable band or in the method that the user selects the cable band having the most currently viewable channels for setup by performing the auto-channel search of the respective cable bands, it is a waste of time in user' s aspect. And, these methods need annoying and complicated operations, thereby causing inconvenience to the user. And, it takes too much time to carry out the auto-scan method that the receiver performs a process of trying to tune the respective channels in the tree kinds of the cable bands on the entire channels. Namely, in case of the cable broadcasting having 200~300 channels, it takes 20∼30 minutes to complete the auto-scan. Hence, this method is inconvenient as well.

### SUMMARY OF THE INVENTION

Accordingly, the present invention is directed to a digital cable broadcast system, TV receiver, and method that substantially obviate one or more problems due to limitations and disadvantages of the related art.

An object of the present invention is to provide a digital cable broadcast system, TV receiver, and method, in which a transmitting side transmits cable band information.

Another object of the present invention is to provide a digital cable broadcast system, TV receiver, and method, in which cable band information is transmitted in a manner of extending Generic Feature Control Protocol defined in SCTE (society of cable telecommunications engineers) 20 standard.

Another object of the present invention is to provide a digital cable broadcast system, TV receiver, and method, in which a transmitted cable band is detected and in which the detected cable band is automatically set as a reception band.

A further object of the present invention is to provide a data structure which includes cable band information.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a digital cable broadcast system includes a broadcast transmitter for transmitting a first cable broadcast signal residing in a selected one of a plurality of cable bands and for transmitting a second cable broadcast signal including cable band information identifying the selected cable band, and a broadcast receiver for parsing the cable band information from the second cable broadcast signal and for receiving the first cable broadcast signal by tuning to a channel based on the selected cable band identified by the parsed cable band information.

In another aspect of the present invention, a digital cable TV receiver includes a POD module for receiving a generic feature control message from a transmitter, the generic feature control message including cable band information identifying a cable band selected by the transmitter, the POD module generating application protocol data including the cable band information, and a host device for parsing the cable band information from the application protocol data and for tuning to a channel based on the cable band identified by the parsed band information in order to receive a cable broadcast signal from the transmitter.

In a further aspect of the present invention, a cable broadcast method includes receiving a generic feature control message from a broadcast transmitter, the generic feature control message including cable band information identifying a cable band selected by the broadcast transmitter, generating application protocol data including the cable band information, parsing the cable band information from the application protocol data, and tuning to a channel based on the cable band identified by the parsed cable band information in order to receive a cable broadcast signal residing in the cable band from the broadcast transmitter.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a diagram of an example that a cable broadcasting station defined in the general SCTE 28 standard transmits a setup value for a generic feature to a cable broadcast receiver;

FIG. 2 is an exemplary diagram of a feature parameters object syntax according to the present invention;

FIG. 3 is an exemplary diagram of a cable band parameters syntax according to the present invention;

FIG. 4 is a block diagram of a cable broadcast receiver according to the present invention;

FIG. 5 is a flowchart of a cable band parsing process according to the present invention; and

FIG. 6 is a flowchart of a process of cable band setup and tuning according to the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts. In addition, the terms used in the present invention are mainly selected from currently usable global and general terms. Yet, most appropriate terms are arbitrarily used by the applicant to keep up with the appearance of new technologies. And, the meanings of the arbitrarily used terms will be clearly explained in the corresponding description. Hence, in apprehending the present invention, the present invention should be understood not by the simple names of the terms but by the meanings of the terms.

First of all, terms used in the description of the present invention are preferentially explained as follows. A cable broadcasting station transmitting cable broadcasts is called a headend (e.g., SO headend, MSO headend) or a cable broadcast transmitter. In this case, SO (system operator) is a cable television provider (i.e., local cable TV broadcasting provider) and several SOs are combined to configure MSO (multiple system operator). A cable broadcast receiver has a POD (point of deployment) module including a CA (conditional access) system. The POD module is separated from a body of the cable broadcast receiver. And, any product enabling reception of cable broadcasts can become the cable broadcast receiver. For instance, a digital TV enabling reception of cable broadcasts without a cable set-top box (e.g., cable ready digital TV), a digital set-top box or the like corresponds to the cable broadcast receiver. The POD module uses a PCMCIA card for example and is loaded in a body slot of the cable broadcast receiver. Hence, the POD module is occasionally called a cable card. And, the body in which the POD module is inserted is called a host as well. In the present invention, the POD module and the body configure the cable broadcast receiver.

In the present invention, cable band information is transmitted from a transmitting side that transmits cable broadcasts and a receiving side parses the cable band information for auto-setup to a reception band. Specifically, in one embodiment of the present invention, cable band information is transmitted by extending the generic feature control protocol defined in the SCTE 28 2004 standard. The SCTE 28 standard is the host-POD interface standard. In the SCTE standard 28 standard, the generic feature control protocol is defined. The generic feature control protocol, which is to transmit various setup values that can exist in the cable broadcast receiver from a cable broadcasting station to the cable broadcast receiver, is a protocol that enables the cable broadcasting station to control the setup values as wanted. In the generic feature control protocol. The setup values are called generic features as defined in Table 1.

**[Table 1]**

| **Feature ID** | **Feature** |
|---|---|
| 00 | Reserved |
| 01 | RF output channel |
| 02 | Parental control PIN |
| 03 | Parental control Settings |
| 04 | IPPV PIN |
| 05 | Time Zone |
| 06 | Daylight Savings Control |
| 07 | AC outlet |
| 08 | Language |
| 09 | Rating Region |
| 0A | Reset PIN |
| 0B | Cable URLs |
| 0C | Emergency Alert Location Code |
| 0D~3F | Reserved for future use |
| 70~FF | Reserved for propriety use |

In case of using the generic feature control protocol, a cable broadcasting station can accurately set various complicated settings that a user has to do for operating a purchased cable broadcast receiver appropriately instead of the user.

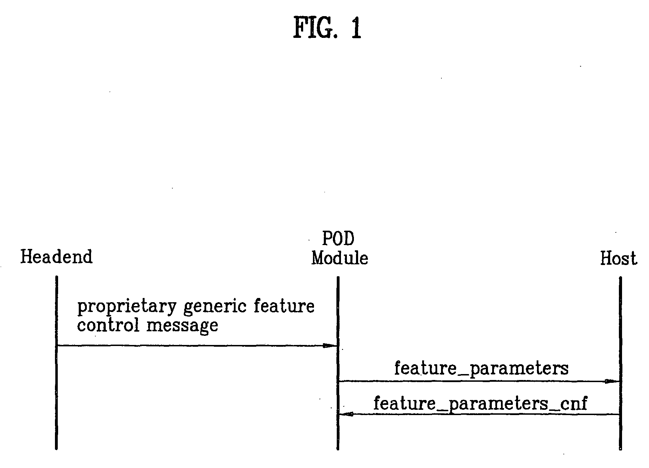

FIG. 1 shows a principle of transmitting setup values of generic features from a cable broadcasting station to a cable broadcast receiver. Referring to FIG. 1, a cable broadcasting station, i.e., a headend puts setup values for the entire portions or a portion of generic features described in Table 1 on a proprietary generic feature control message and then transmits the message to a POD module of a cable broadcast receiver. The POD module puts the received values on Feature_parameters APDU (application protocol data unit) to transfer to a host. After having passed the corresponding APDU, the host applies the setup values of the features that need settings to its system. Thus, the SCTE 28 provides an auto configuration method of configuring setup values of features necessary for a cable broadcast receiver automatically.

The present invention is to extend the aforesaid generic feature control protocol to send cable band information to a receiving side from a transmitting side. In this case, the generic feature control protocol is extended to maintain compatibility with all cable broadcast receivers to which the SCTE 28 standard is applicable. Table 2 shows generic features and IDs allocated to the generic features defined in an extended generic feature control protocol according to the present invention.

**[Table 2]**

| Feature ID | Feature |
|---|---|
| 00 | Reserved |
| 01 | RF output channel |
| 02 | Parental control PIN |
| 03 | Parental control Settings |
| 04 | IPPV PIN |
| 05 | Time Zone |
| 06 | Daylight Savings Control |
| 07 | AC outlet |
| 08 | Language |
| 09 | Rating Region |
| 0A | Reset PIN |
| 0B | Cable URLs |
| 0C | Emergency Alert Location Code |
| ***0D*** | ***Cable Band*** |
| 0E~3F | Reserved for future use |
| 70~FF | Reserved for propriety use |

A portion represented by Italian bold letters in Table 2 is a cable band feature newly defined in a generic feature control protocol of the present invention. In Table 2, ' 0D' is allocated to a cable band ID, which is one embodiment only. Instead of ' 0D' , a different unused ID value can be allocated according to a designer. For instance, ' 0E' can be allocated as a cable band feature ID.

In one embodiment of the present invention, ' 0D' is allocated to a cable band feature ID. Namely, periodically, if necessary, or by a request of a host, a cable broadcasting station puts setup values for the entire portions or a portion of generic features described in Table 2 on a proprietary generic feature control protocol message and then transmits the message to a POD module of a cable broadcast receiver. Once receiving the proprietary generic feature control message, the POD module of the cable broadcast receiver puts the information on feature_parameters APDU and then transmits the APDU to a host at an arbitrary time. After having parsed the received APDU, the host applies the setup values of the features that need settings to its system. The host then transmits confirmation feature_parameters_cnf to the POD module/

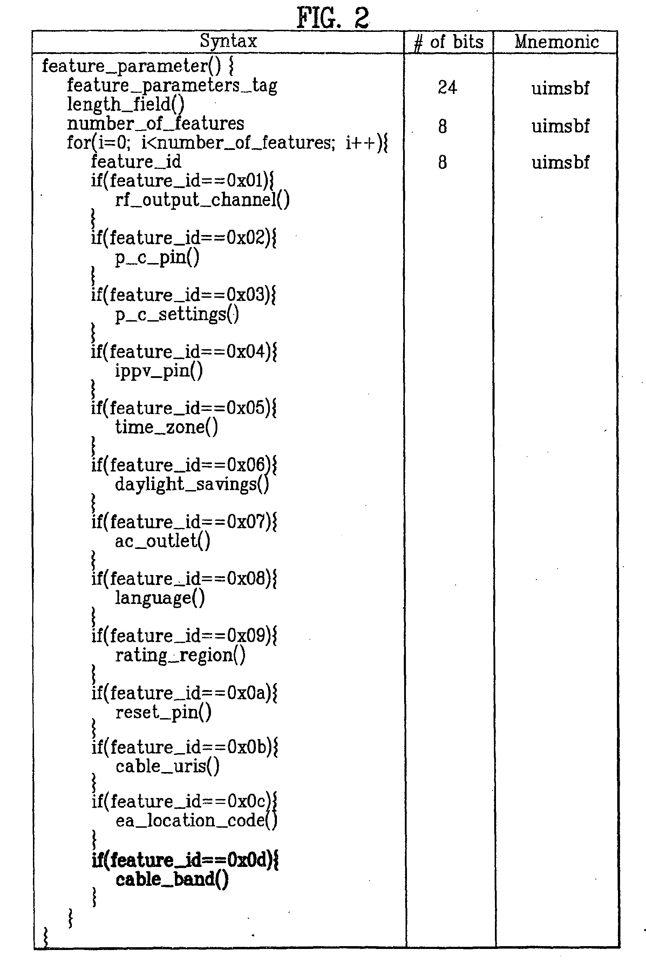

FIG. 2 shows one example of a feature parameters object syntax transmitted to a host from a POD module according to the present invention. Referring to FIG. 2, in the SCTE 28, 0x9F9807 is allocated to a feature_parameters_tag filed value. Namely, if 0x9F9807 is inputted from a POD module, a host decides that it is feature_parameters and then detects the number of features transmitted from a transmitting side by parsing 8-bit number_of_features. Subsequently, the host determines a species of features by parsing feature_id and then performs a control according to a value included in the feature. Such a procedure is repeated as many as the number parsed in the number_of_features field.

For instance, if feature_id is 0x09, a species of the feature is decided as rating_region feature and sets a rating region of a cable broadcast receiver to a value included in a rating region parameter. If feature_id is 0x0d, a species of the feature is decided as a cable band feature and automatically sets a cable band includes in a cable band parameter, i.e., a cable band transmitted from a transmitting side to a reception band of a tuner.

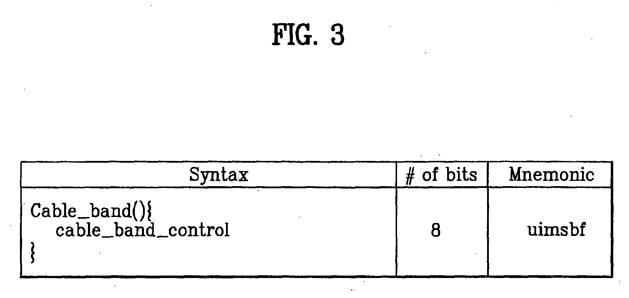

FIG. 3 shows a configuration of a cable band parameter syntax cable_band() within a feature parameters object syntax defined in the present invention. Namely, 8 bits are allocated to a cable_band_control field within a cable_band() syntax and a cable band value is defined by an unsigned integer number. Table 3 exemplarily shows a cable band defined in a cable_band _control field.

**[Table 3]**

| cable_band_control field value | Cable band |
|---|---|
| 00 | STD |
| 01 | HRC |
| 02 | IRC |
| 03~FF | Reserved |

In Table 3, a cable_band_control field value allocated to each cable band is just one embodiment and can be varied by a system designer. In case of taking Table 3 as an example, if a cable_band_control field value is 01, a reception band of a tuner is set to HRC band. And, in channel tuning including auto-scan, the channel tuning is performed in the HRC band. This is carried on until the cable band information transmitted from the transmitting side is changed.

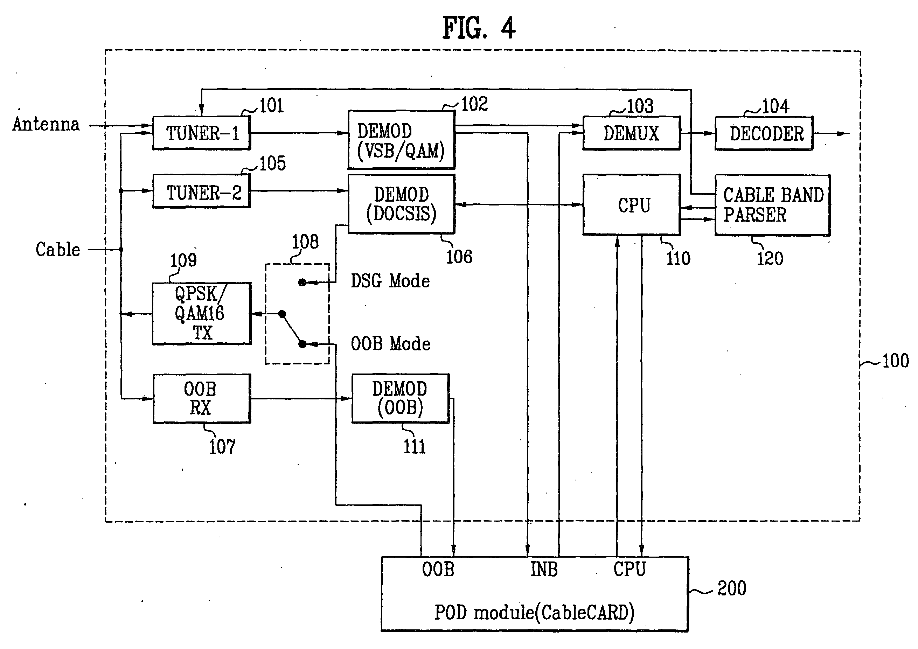

FIG. 4 shows one example of a cable broadcast receiver including a cable band parsing unit according to the present invention. Referring to FIG. 4, a cable broadcast receiver including a cable band parsing unit according to the present invention basically includes a host 100 and a POD module 200 detachably loaded in a slot of the host 100. The host 100 enables a reception dedicated to cable broadcasts only or receptions of cable broadcasts, terrestrial broadcasts and satellite broadcasts. A cable digital TV enabling receptions of cable and terrestrial broadcasts is shown in FIG. 4 for example.

There are two kinds of methods in data broadcasting systems for stock information, weather forecast and the like. Specifically, as a system for uplink services within an open cable, OOB (out of band) system and DSG (DOCSIS settop gateway) system have been proposed. Data broadcasting enables a viewer to instantly select a specific program in watching TV, to participate in a broadcast program personally, or to select to view necessary information. In this case, the OOB system is a generalized system in U.S.A. And, which system will be adopted as a standard is being discussed in Republic of Korea. Namely, Dedicated OOD System, Mixed OOB & DSG System, Dedicated DSG system and the like are being discussed.

The OOB system is the standard of transport specifications between a cable broadcasting station (headend) and an intersec instrument within a settop box. DSG (DOCSIS settop gateway) means a transport system between a cable modem control system of a cable broadcasting station and a DOCSIS-based cable modem within a settop box. The DOCSIS, which is the digital cable TV standard adopted by Cablelabs as the U.S. cable broadcasting standard authentication institution, is the standard enabling data transmission using a cable modem. An embodiment of the cable broadcast receiver employing the Mixed OOB & DSG system is shown in FIG. 4. This is just exemplary. So, an OOB or DSG dedicated cable broadcast receiver is usable as well.

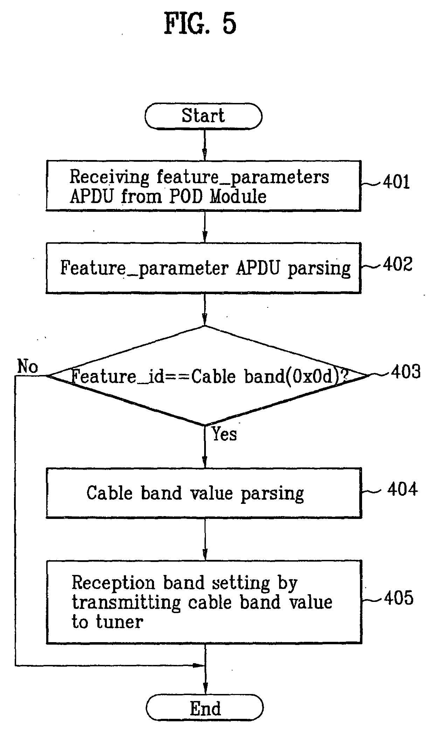

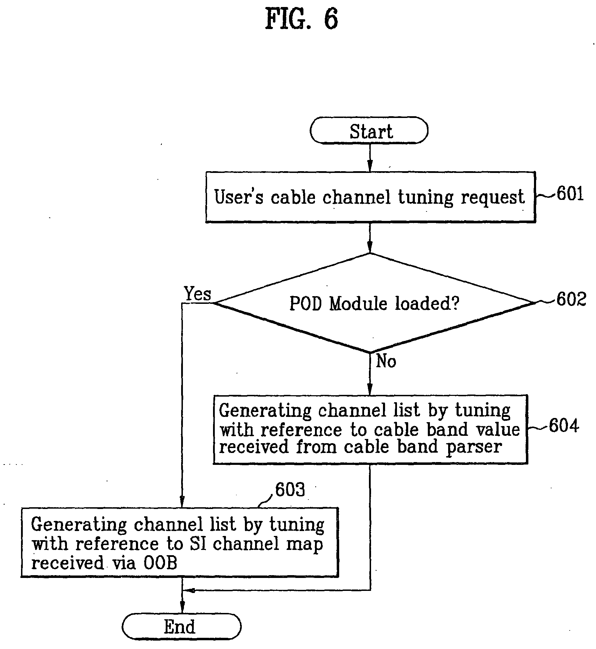

FIG. 5 is an operational flowchart of a cable broadcast receiver according to the present invention, in which a process of detecting cable band information transmitted from a cable broadcasting station is shown. FIG. 6 is an operational flowchart of a cable broadcast receiver according to the present invention, in which a channel tuning process using a cable band transmitted from a cable broadcasting station is shown. A first tuner 101 of the host 100 in FIG. 4 tunes a specific channel frequency of a terrestrial A/V (audio/video) broadcasting transmitted via an antenna or a cable A/V broadcasting transmitted as an in-band signal via a cable and then outputs the tuned signal to a first demodulation unit 102.

In this case, since the terrestrial broadcasting and the cable broadcasting differ from each other in transmission system, their demodulation schemes in the first demodulation unit 102 differ from each other. Namely, the terrestrial A/V broadcasting is transmitted by VSB (vestigial sideband modulation) and the cable A/V broadcasting is transmitted by QAM (quadrature amplitude modulation). Hence, if the channel frequency tuned in the first tuner 101 corresponds to the terrestrial broadcasting, demodulation is carried out by VSB in the first demodulation unit 102. If the channel frequency tuned in the first tuner 101 corresponds to the cable broadcasting, demodulation is carried out by QAM in the first demodulation unit 102.

If a signal demodulated in the first demodulation unit 102 corresponds to the terrestrial broadcasting, the demodulated signal is outputted to a demultiplexing unit 103. If a signal demodulated in the first demodulation unit 102 corresponds to the cable broadcasting, the demodulated signal is outputted to the demultiplexing unit 103 via the POD module 200 loaded in the slot. The POD module 200 includes a CA (conditional access) system for copy prevention and conditional access to valuable broadcast contents and can be called a cable card.

Namely, if the cable A/V broadcasting is scrambled, the POD module 200 de-scrambles the cable A/V broadcasting to output to the demultiplexing unit 103. If the POD module 200 is not loaded, the cable A/V broadcasting demodulated in the first demodulation unit 102 is directly outputted to the demultiplexing unit 103. In this case, it is unable to de-scramble the scrambled cable A/V broadcasting which cannot be normally viewed. The demultiplexing unit 103 separates the received multiplexed video and audio signals to output to a decoder 104. The decoder 104 restores the compressed A/V signal into original signals through video decoding algorithm and audio decoding algorithm respectively to output for a display.

A second tuner 105 tunes a specific channel frequency of a data broadcast transmitted via a cable by DSG and then outputs the tuned signal to a second demodulation unit 106. The second demodulation unit 106 demodulates the data broadcast of DSG and then outputs the demodulated signal to a CPU 110. And, a third tuner 107 tunes a specific channel frequency of a data broadcast transmitted via a cable by OOB and then outputs the tuned signal to a third demodulation unit 111. The third demodulation unit 111 performs QPSK demodulation on the data broadcast of OOB and then outputs the demodulated signal to the POD module 200. Namely, since the QPSK transmission system is used in case of the OOB, a receiving side performs demodulation according to the QPSK system.

In case that bi-directional communications between the cable broadcasting station and the cable broadcast receiver are possible, informations (e.g., pay program subscription, receiver state information, etc.) transmitted from the cable broadcast receiver to the cable broadcasting station are transmitted by the OOB or DSG system. For this, a switching unit 108 is provided. In case of the OOB system, user or receiver state information is outputted to a modulation unit 109 via the POD module 200 and the switching unit 108. The demodulation unit 109 performs QPSK modulation on the outputted signal to transfer to the cable broadcasting station via the cable. In case of the DSG system, the user or receiver state information is outputted to the modulation unit 109 via the CPU 110 and the switching unit 108. The modulation unit 109 performs QAM-16 modulation on the outputted signal to transfer to the cable broadcasting station via the cable.

A process of receiving to process cable band information transmitted from a cable broadcasting station is explained with reference to FIG. 5 and FIG. 6 as follows. First of all, the proprietary generic feature control message transmitted from the cable broadcasting station via the cable is outputted to the POD module 200 via the OOB tuner 107 and the third demodulation unit 111. A CPU of the POD module 200 puts the generic feature information of the proprietary generic feature control message on the feature_parameters APDU and then transmits the APDU to the CPU 110 of the host 100 (step 501). Namely, the generic feature information includes a feature ID and setup value. In this case, the feature ID can be known by parsing the feature parameters object syntax within the feature_parameters APDU and the setup value of the parsed specific feature can be known by parsing the corresponding feature parameter syntax. Namely, the CPU 110 of the host 100 parses the feature_parameters object syntax shown in FIG. 2 (step 502) to confirm whether a current feature_id field value is 0x0D (step 503).

If the feature_id value is 0x0d, it is decided as the cable band feature and then the corresponding decision result is outputted to a cable band parser 120. The cable band parser 120 parses the cable band parameter syntax shown in FIG. 3 to detect the cable band transmitted from the cable broadcasting station (step 504). The detected cable band value is then outputted to the first tuner 101 to automatically set the reception band (step 505). For instance, if a cable_band_control field value within the cable band parameter syntax is 00, it is decided as the STD band so that the reception band of the first tuner 101 is set to the STD band. If the cable_band_control field value within the cable band parameter syntax is 01, it is decided as the HRC band so that the reception band of the first tuner 101 is set to the HRC band.

Meanwhile, if the feture_id field value parsed in the step 502 has a value different from 0x0d, the CPU 110 parses the feature parameter syntax to obtain a setup value of the corresponding feature and then applies it to the corresponding part. Thereafter, if the user or host selects channel auto-scan (step 601), it is decided whether the POD module 200 is loaded in the slot of the host 100 (step 602). If the POD module 200 is loaded, a currently viewable channel list (i.e., a channel list that can be viewed) is generated with reference to a service information (SI) channel map received via the OOB (step 603). Namely, SI, which is a broadcasting protocol to transmit channel and broadcast program guide information, is transmitted to the POD module 200 via the third tuner 107 and the third demodulation unit 111. Since the SI including currently viewable channel map information therein is transmitted, the POD module can generate the currently viewable channel list by parsing the SI.

If the POD module 200 is not loaded, it is unable to parse the SI. Hence, the currently viewable channel list is generated by channel auto-scan. If the step 602 decides that the POD module is not loaded, all channel frequencies of the cable band set in the first tuner 101 are sequentially tuned to generate the currently viewable channel list (step 604). In this case, the reception band set in the first tuner 101 is the cable band transmitted from the cable broadcasting station. For instance, if the reception band of the first tuner 101 is set to the STD band, the first tuber 101 sequentially tunes all channel frequencies of the STD band to generate the currently viewable channel list.

The channel auto-scan is explained in FIG. 6. Yet, the same principle is also applicable to the case that a user selects a specific channel. Namely, if a user selects a specific channel, the first tuner 101 tunes a specific channel frequency of the cable band set as the current reception band. Meanwhile, if the cable band is switched to another cable band, the cable broadcasting station amends the cable_band_control field value within the cable band parameter syntax into a corresponding cable band value to transmit. If the cable_band_control field value within the cable band parameter syntax is different from a previous value, the cable broadcast receiver updates the reception band of the first tuner 101 into a new cable band value.

The above-explained transmitting/receiving and processing method of the cable band information can be performed using hardware, middleware or software. And, the present invention is applicable to all kinds of televisions and settop boxes supporting cable broadcasting. Specifically, the present invention is applicable to all kinds of cable broadcast receivers adopting the SCTE 28 standard.

Accordingly, the present invention provides the following advantages or effects. First of all, the transmitting side that transmits cable broadcasts is made to transmit the cable band information and the receiving side parses the cable band information to automatically set up the reception band. Therefore, a user is not required to know the cable band for channel auto-scan and a user' s operation of selecting the cable band is not necessary. Therefore, user' s convenience is enhanced. Secondly, in case that there exist a plurality o cable bands, channel auto-scan is performed on channel frequencies of the cable band transmitted from the cable broadcasting station only. Therefore, a channel searching time is reduced to minimize waste of time. Thirdly, the present invention extends the generic feature control protocol defined in the SCTE 28 standard to transmit the cable band information, thereby facilitating the extension of the protocol and thereby being applicable to all kinds of cable broadcast receivers adopting the conventional SCTE 28 standard with excellent compatibility.

It will be apparent to those skilled in the art that various modifications and variations can be made in the present invention. Thus, it is intended that the present invention covers the modifications and variations of this invention provided they come within the scope of the appended claims and their equivalents.

## Claims

1. A digital cable broadcast system, comprising:
a broadcast transmitter for transmitting a first cable broadcast signal residing in a selected one of a plurality of cable bands and for transmitting a second cable broadcast signal including cable band information identifying the selected cable band; and
a broadcast receiver for parsing the cable band information from the second cable broadcast signal and for receiving the first cable broadcast signal by tuning to a channel based on the selected cable band identified by the parsed cable band information.

2. The digital cable broadcast system of claim 1, wherein the first cable broadcast signal is an in-band signal and the second cable broadcast signal is an out-of-band signal.

3. The digital cable broadcast system of claim 1, wherein the selected cable band is any one of standard (STD), harmonic related carrier (HRC), and increment related carrier (IRC) bands.

4. The digital cable broadcast system of claim 1, wherein the broadcast receiver comprises:
a POD module for receiving a generic feature control message including the cable band information from the broadcast transmitter and for generating application protocol data including the cable band information; and
a host device for parsing the cable band information from the application protocol data and for tuning to the channel based on the selected cable band.

5. The digital cable broadcast system of claim 4, wherein the host device performs automatic scanning through a plurality of channel frequencies based on the selected cable band identified by the parsed cable band information in order to generate a viewable channel list.

6. A digital cable TV receiver, comprising:
a POD module for receiving a generic feature control message from a transmitter, the generic feature control message including cable band information identifying a cable band selected by the transmitter, the POD module generating application protocol data including the cable band information; and
a host device for parsing the cable band information from the application protocol data and for tuning to a channel based on the cable band identified by the parsed band information in order to receive a cable broadcast signal from the transmitter.

7. The digital cable TV receiver of claim 6, wherein the cable broadcast signal is an in-band signal.

8. The digital cable TV receiver of claim 6, wherein the POD module receives an out-of-band signal including the generic feature control message from the transmitter.

9. The digital cable TV receiver of claim 6, wherein the selected cable band is any one of standard (STD), harmonic related carrier (HRC), and increment related carrier (IRC) bands.

10. The digital cable TV receiver of claim 6, wherein the host device performs automatic scanning through a plurality of channel frequencies based on the cable band identified by the parsed cable band information in order to generate a viewable channel list.

11. A cable broadcast method, comprising:
receiving a generic feature control message from a broadcast transmitter, the generic feature control message including cable band information identifying a cable band selected by the broadcast transmitter;
generating application protocol data including the cable band information;
parsing the cable band information from the application protocol data; and
tuning to a channel based on the cable band identified by the parsed cable band information in order to receive a cable broadcast signal residing in the cable band from the broadcast transmitter.

12. The cable broadcast method of claim 11, wherein the cable broadcast signal is an in-band signal.

13. The cable broadcast method of claim 11, wherein the generic feature control message resides in an out-of-band signal sent from the broadcast transmitter.

14. The cable broadcast method of claim 11, wherein the selected cable band is any one of standard (STD), harmonic related carrier (HRC), and increment related carrier (IRC) bands.

15. The cable broadcast method of claim 11, further comprising performing automatic scanning through a plurality of channel frequencies based on the cable band identified by the parsed cable band information in order to generate a viewable channel list.

16. A data structure for application protocol data for use in a digital cable TV receiver, the data structure comprising cable band information identifying a cable band selected by a broadcast transmitter, wherein the selected cable band is any one of standard (STD), harmonic related carrier (HRC), and increment related carrier (IRC) bands.
